# EUROPEAN PATENT APPLICATION

(11) **EP 2 107 094 A1**
(43) Date of publication of application: **07.10.2009**
(21) Application number: 09380059.7
(22) Date of filing: 24.03.2009
(51) Int. Cl.: C09K 5/04

(54) **Composition useful as a refrigerant fluid and its use in a heat transfer system**

(30) Priority: 03.04.2008 ES 200800918
(71) Applicant: Advanced Ideas, S.L., 08197 Valldoreix (ES); Gases Research Innovation and Technology S.L. (GRIT S.L.), 08007 Barcelona (ES)
(72) Inventor: Terrado Pablo, Ramon Jose, 08917 Valldoreix (ES)
(74) Representative: Sugrañes Patentes y Marcas

(57) **Abstract**

The invention relates to a composition useful as a refrigerant fluid comprising from 60 to 75% by weight of the refrigerant agent pentafluoroethane (R-125); from 15 to 30% by weight of the refrigerant agent 1,1-difluoroethane (R-152a); from 2 to 15% by weight of a refrigerant agent selected from a first group consisting of 1,1,1,2,3,3,3-Heptafluoropropane (R-227ea) and 1,1,1,2-tetrafluoroethane (R-134a) or a mixture of both; and from 0 to 4% by weight of another refrigerant agent selected from a second group consisting of dimethyl ether (DME) and propane (R-290) or a mixture of both. The invention also relates to the use of said composition in a heat transfer system.

## Description

### Technical Field of the Invention

The present invention relates to a refrigerant composition, suitable for being used as a monochlorodifluoromethane or R-22 substitute. The invention also relates to refrigeration systems comprising such composition.

### Background of the Invention

Monochlorodifluoromethane (R-22) has been used as a refrigerant fluid in refrigeration systems, or more generically in heat transfer systems, which, as it is a hydrofluorochlorocarbon, is harmful for the environment due to its reactivity with the ozone of the stratospheric layer of the Earth's atmosphere.

Due to its activity as an ozone layer-destroying agent, R-22 must be completely substituted in all those devices and processes in which it is used. To that end, the industry has developed alternative compounds and mixtures thereto, such as R-407c, which is a mixture comprising 1,1,1,2-tetrafluoroethane (52%), pentafluoroethane (25%) and difluoromethane (23%). However, the oils used in current refrigeration systems are immiscible with this mixture (R-407c). For the purposes of preventing this immiscibility problem, the industry has developed new oils based on polyolester. However, said new lubricants are ten times more hygroscopic than those used with R-22.

It is extremely interesting to obtain refrigerant mixtures which can work with the traditional lubricants present in the systems working with R-22 and having a behaviour similar to the latter.

The refrigerant mixtures existing on the market, such as R-407c, currently do not have the physicochemical characteristics of R-22 in all their fields of application, since they have behave differently at different temperatures. This entails that, depending on the application, R-22 must be substituted with different mixtures.

R-22 substitute refrigerant mixtures or compositions directly applicable with the natural or typical oils of refrigeration systems are those described in document EP1184438 A1, which describes compositions containing R-125 (pentafluoroethane), R-134a (1,1,1,2-tetrafluoroethane) and DME (dimethyl ether) which are applicable. These products are currently not on the market due to the fact that they have a very large GLIDE (temperature glide) and cannot substitute one and the same composition like R-22 in all the conditions, i.e., high medium and low temperature, therefore several products (different compositions) are needed for each range of temperatures.

Another example of an R-22 substitute composition is described in application W02006038766. This document details refrigerant mixtures of R-290 (propane), R-134a (1,1,1,2-tetrafluoroethane) and R-152a (1,1-difluoroethane).

However, these compositions of the state of the art do not have the same behaviour as R-22, therefore they cannot serve as substitutes in the entire range of temperatures at which the systems operable with R-22 can work. In fact, the aforementioned patent application WO2006038766 mentions a number of products, which can be used in a refrigerant composition. Some of them, as well as their mixtures, are inflammable, therefore if it is not specified which specific mixture of products is proposed, it cannot be assured that the latter is not inflammable, and it can also not be known which is the GLIDE of the proposed mixture, or the refrigerating capacities and efficiencies obtained with said mixture.

There is therefore a need in the state of the art to formulate an alternative refrigerant mixture to R-22 which is not harmful for the ozone layer, which is compatible with the lubricant oils used with R-22; and which can be used in the entire range of temperatures in which R-22 was applicable and with equivalent efficiencies.

### Disclosure of the Invention

From the exhaustive investigation and surprisingly, new refrigerant compositions have been discovered which, due to the fact of containing R-152, reduce the GWP (Global Warming Potential) factor, a factor representing one of the most desired parameters in the new products. Furthermore, this factor is intrinsically linked to the energy efficiency depending on the electric power generation source, therefore the efficiency of the mixture is also a desirable and indispensable factor. The proposed mixtures have efficiencies similar to R-22 in all the fields, high, medium and low temperature. In the current state of the art, there is no multi-purpose product on the market with an efficiency equal to R-22 which can replace it.

A composition has been formulated comprising from 60 to 75% by weight of the refrigerant agent pentafluoroethane (R-125); from 15 to 30% by weight of the refrigerant agent 1,1-difluoroethane (R-152a); from 2 to 15% by weight of a refrigerant agent selected from a first group consisting of 1,1,1,2,3,3,3-Heptafluoropropane (R-227ea) and 1,1,1,2-tetrafluoroethane (R-134a) or a mixture of both; and from 0 to 4% by weight of another refrigerant agent selected from a second group consisting of dimethyl ether (DME) and propane (R-290) or a mixture of both.

According to another feature of the invention, the composition comprises from 65 to 75% by weight of R-125; from 15 to 30% by weight of R-152a; from 2 to 10% by weight of a refrigerant agent selected from a first group consisting of R-227ea and R-134a or a mixture of both; and from 0 to 4% by weight of another refrigerant agent selected from a second group consisting of DME and propane (R-290) or a mixture of both.

According to a variant of the composition, the latter comprises the compound R-227ea as a refrigerant agent of the first group.

According to another variant of the composition, the latter comprises the compound R-134a as a refrigerant agent of the first group.

According to another variant of the composition, the latter comprises a mixture of the compounds R227ea and R-134a as a refrigerant agent of the first group.

The composition object of the invention is **characterized in that** it comprises dimethyl ether (DME) as a refrigerant agent of the second group.

According to another variant of the composition, the latter comprises the compound propane (R-290) as a refrigerant agent of the second group.

According to another variant of the composition, the latter comprises a mixture of the compounds DME and R-290 as a refrigerant agent of the second group.

Another object of the invention is a composition consisting of 70% by weight of R-125; 20% by weight of R-152a; 7% by weight of R-227ea and 3% by weight of DME.

According to another feature of the invention, the composition consists of 68% by weight of R-125; 24% by weight of R-152a; 5% by weight of R-227ea and 3% by weight of DME.

The composition object of the invention is **characterized in that** it consists of 70% by weight of R-125; 22% by weight of R-152a; 5% by weight of R-227ea and 3% by weight of DME.

According to another feature of the invention, the composition consists of 67% by weight of R-125, 15% by weight of R-152a; 15% by weight of R-134a; and 3% by weight of DME.

Another object of the present invention is the use of a composition as it has been described above as an R-22 substitute refrigerant fluid in a heat transfer system.

The object of the present invention is a heat transfer system, suitable for R-22, comprising a composition as it has been previously described above.

Specifically, the heat transfer systems correspond to refrigerating systems and air conditioning systems with heat pumps, air conditioning systems being preferred.

### Brief Description of the Drawings

For the purpose of better illustrating the advantages and properties of the composition object of the invention, pressure graphs are attached by way of non-limiting examples which show the vapour pressure at different temperatures, the same range being compared with the data obtained with monochlorodifluoromethane (R-22). Thus, in said pressure-temperature dependence graphs or diagrams:
Figure 1 shows the behaviour of a composition according to the invention;
Figure 2 corresponds to the same type of graph as that of Figure 1 but with a composition according to a first alternative invention;
Figure 3 corresponds to the same type of graph as that of Figure 1 but with a composition according to a second alternative invention;
Figure 4 corresponds to the same type of graph as that of Figure 1 but with a composition according to a third alternative invention.

Also attached by way of non-limiting examples are refrigerating capacity, calorific value and absorbed power graphs obtained with two different types of installations and in different conditions of outdoor and indoor temperature using several refrigerant compositions according to the invention and comparing the same range with the data obtained with monochlorodifluoromethane (R-22). Thus, in said capacity/value/power-temperature dependence graphs:

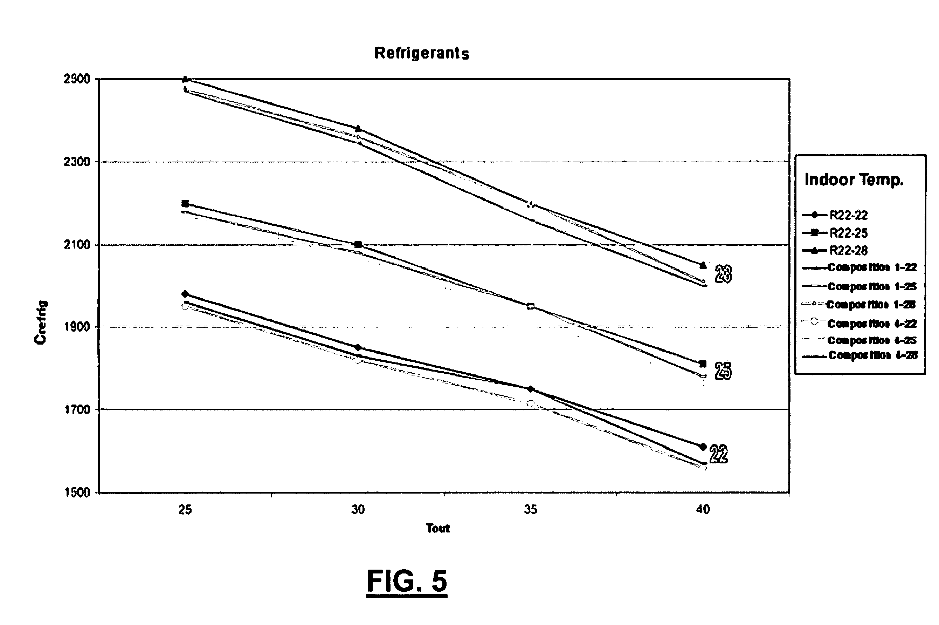

Figure 5 shows the refrigerating capacities of an air conditioning installation with a heat pump, obtained with two compositions according to the invention and with R22 depending on the indoor and outdoor temperatures in summer conditions;

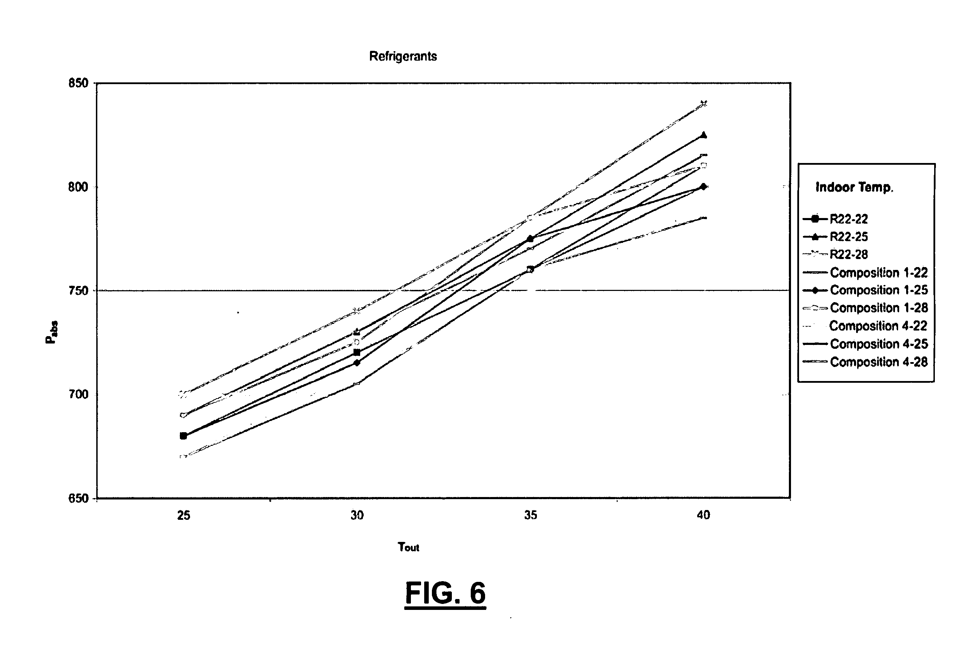

Figure 6 shows the absorbed power of an air conditioning installation with a heat pump, obtained with two compositions according to the invention and with R22 depending on the indoor and outdoor temperatures in summer conditions;

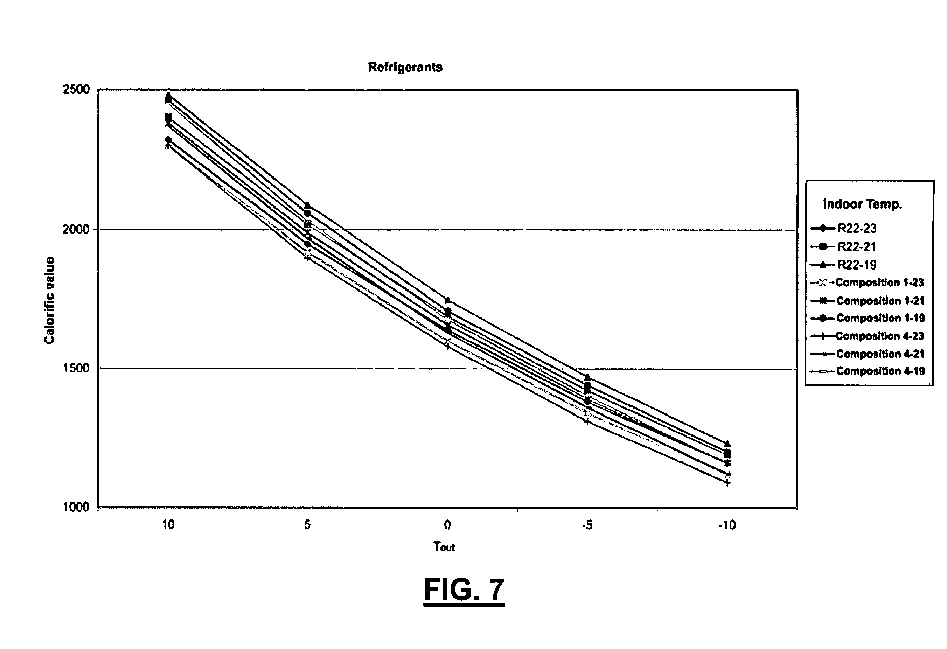

Figure 7 shows the refrigerating capacities of an air conditioning installation with a heat pump, obtained with two compositions according to the invention and with R22 depending on the indoor and outdoor temperatures in winter conditions;

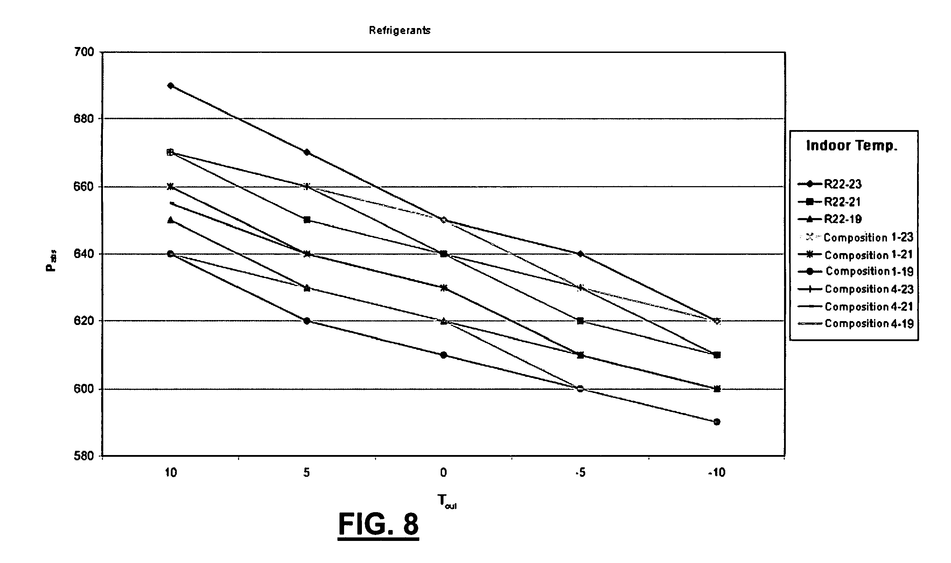

Figure 8 shows the absorbed power of an air conditioning installation with a heat pump, obtained with two compositions according to the invention and with R22 depending on the indoor and outdoor temperatures in winter conditions;

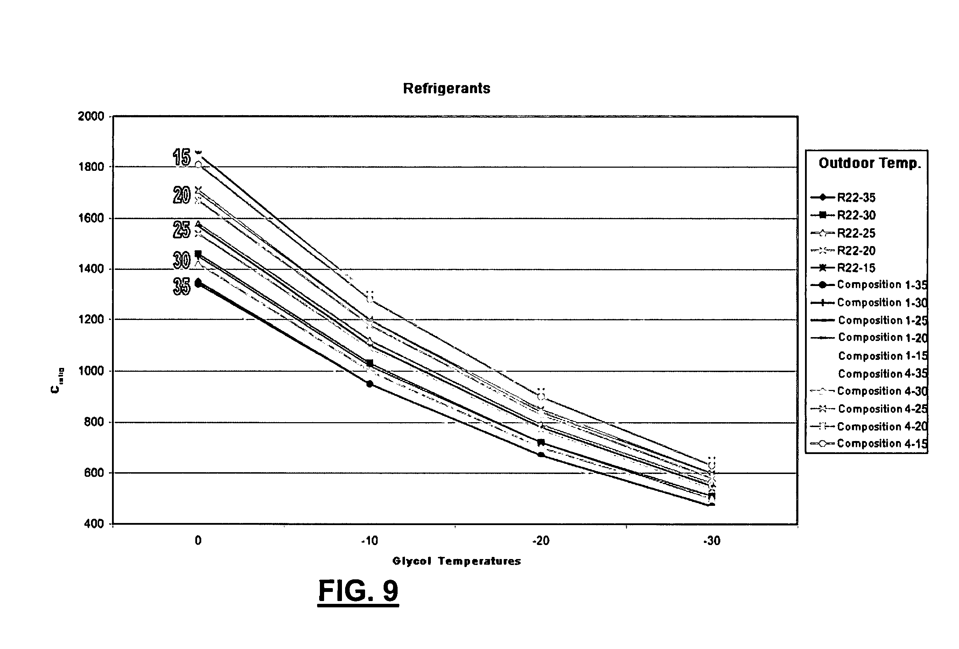

Figure 9 shows the refrigerating capacities obtained with two compositions according to the invention and with R22 with a refrigeration installation with glycolated water and air in the condenser depending on outdoor temperatures between 15 °C and 35 °C and on glycol temperatures between 0 °C and -30 °C; and

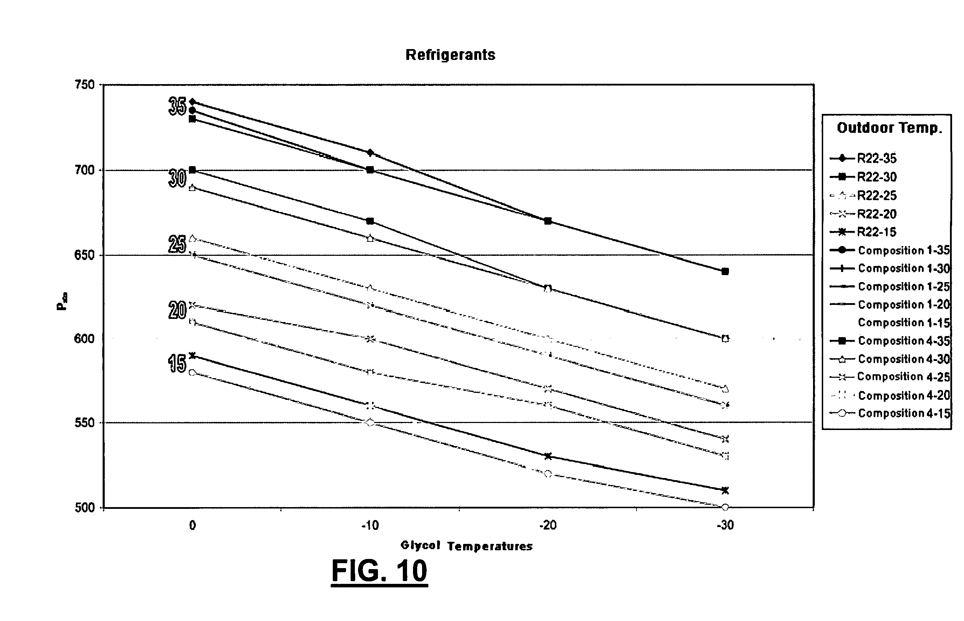

Figure 10 shows the absorbed power obtained with two compositions according to the invention and with R22 with a refrigeration installation with glycolated water and with air in the condenser depending on outdoor temperatures between 15 °C and 35 °C and on glycol temperatures between 0 °C and -30 °C.

### Detailed Description of the Invention

For the purpose of illustrating the behaviour of the refrigerant compositions object of the invention, the preferred compositions and the physicochemical characteristics thereof are described below.

Thus, a composition comprising from 60 to 75% by weight of pentafluoroethane (R-125); from 15 to 30% by weight of R-152a (1,1-difluoroethane); from 2 to 15% by weight of a refrigerant agent selected from a first group consisting of 1,1,1,2,2,3,3,3-heptafluoropropane (R-227ea) and 1,1,1,2-tetrafluoroethane (R-134a) or a mixture of both; and from 0 to 4% by weight of another refrigerant agent selected from a second group consisting of DME and propane or a mixture of both, is obtained by adding each of the compounds integrating the mixture, in an order of lowest to highest vapour pressure, in a container having absolute vacuum (< 1mbar). The mentioned container is placed on a contrasted scale to be able to precisely weigh the amount of compound added in each step.

The attached Examples detail some of the preferred compositions.

### Example 1: Refrigerant composition 1.

500 kg of the mixture are prepared, in which the compounds R-125, R-152a, R-227ea and DME are present in the following proportions by weight: 70% R-125, 20% R-152a, 7% R-227ea and 3% DME. To that end, a reactor is placed on a contrasted scale and a pressure of 0.5 mbar is established. Then, the aforementioned compounds are introduced by pumping depending on their vapour pressure (from lowest to highest), i.e., in the following order: R-227ea, R-152a, DME and R-125.

One of the preferred compositions is the one corresponding to this Example 1. This mixture of Example 1 presents a vapour pressure of 9.1 bar (9.5 x 10⁵ Pa) at 20 °C and has a density at 20 °C of 1220 kg/m³ in liquid state and a density of 35.5 kg/m³ in gaseous state at 20 °C. The latent heat at 0 °C is 207 kJ/kg.

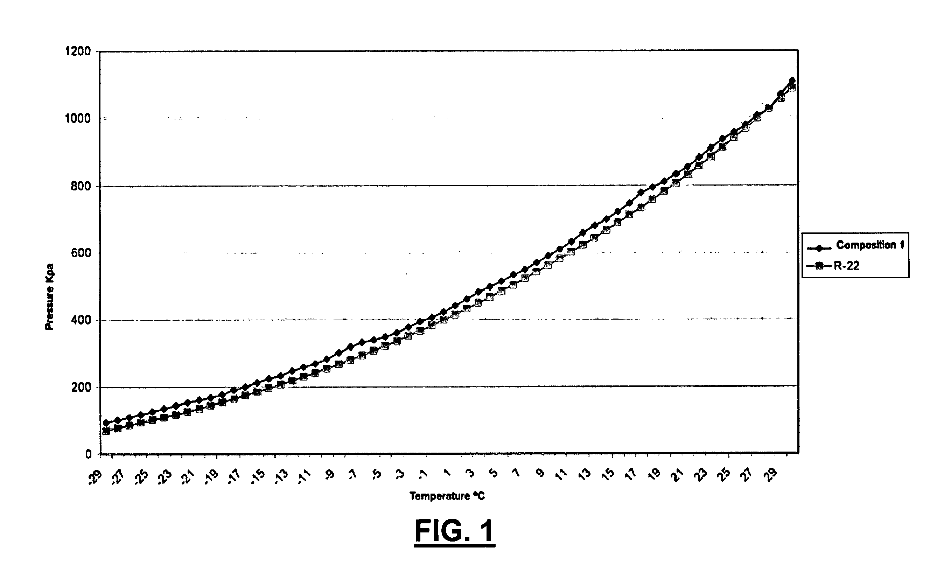

As can be seen in Figure 1, the mixture of Example 1 has physical and thermodynamic properties comparable to those of R-22. In this Figure 1, the vapour pressure of the composition of Example 1 (diamonds) has been depicted at different operating temperatures and it has been compared with the vapour pressures of R-22 at the same temperatures (squares). These results have been obtained empirically. The coincidence of the curves indicates a parallel behaviour between the compositions.

### Example 2: Refrigerant composition 2.

In the same way as in Example 1, 500 kg of a refrigerant mixture are prepared with the following final proportions by weight: 68% R-125, 24% R-152a, 5% R-227ea and 3% DME. This mixture of Example 2 has a density at 20 °C of 1208 kg/m³ in liquid state and a density of 34.5 kg/m³ in gaseous state at 20 °C. The latent heat at 0 °C is 214 kJ/kg.

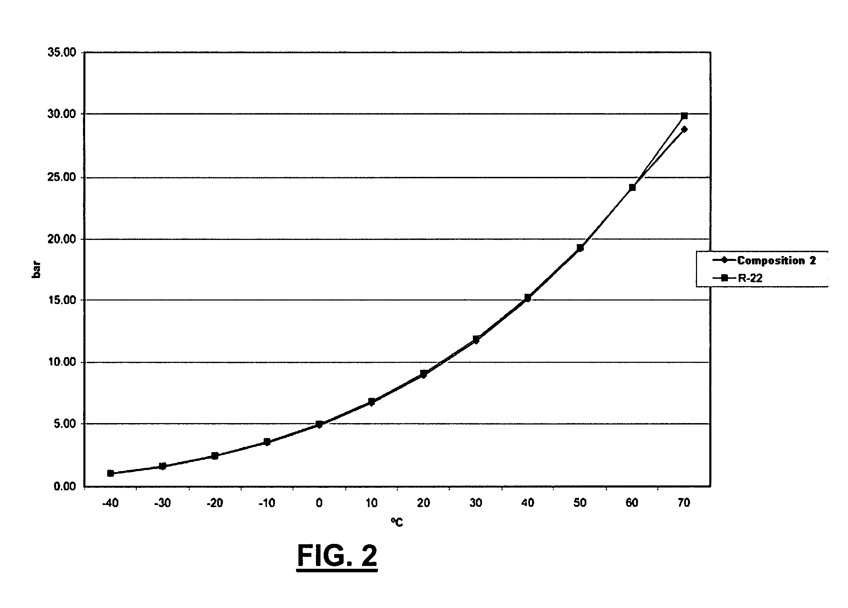

The obtained mixture has vapour pressures shown in Figure 2. The mixture of Example 2 has physical and thermodynamic properties comparable to those of R-22. In this Figure 2, the vapour pressure of the composition of Example 2 (diamonds) at different operating temperatures and it has been compared with the vapour pressures of R-22 at the same temperatures (squares). The coincidence of the curves again indicates this parallel behaviour between the compositions.

### Example 3: Refrigerant composition 3.

In the same way as in Example 1, 500 kg of a refrigerant mixture are prepared with the following final proportions by weight: 70% R-125, 22% R-152a, 5% R-227ea and 3% DME. This mixture of Example 3 has a density at 20 °C of 1210 kg/m³ in liquid state and a density of 35 kg/m³ in gaseous state at 20 °C. The latent heat at 0 °C is 210 kJ/kg.

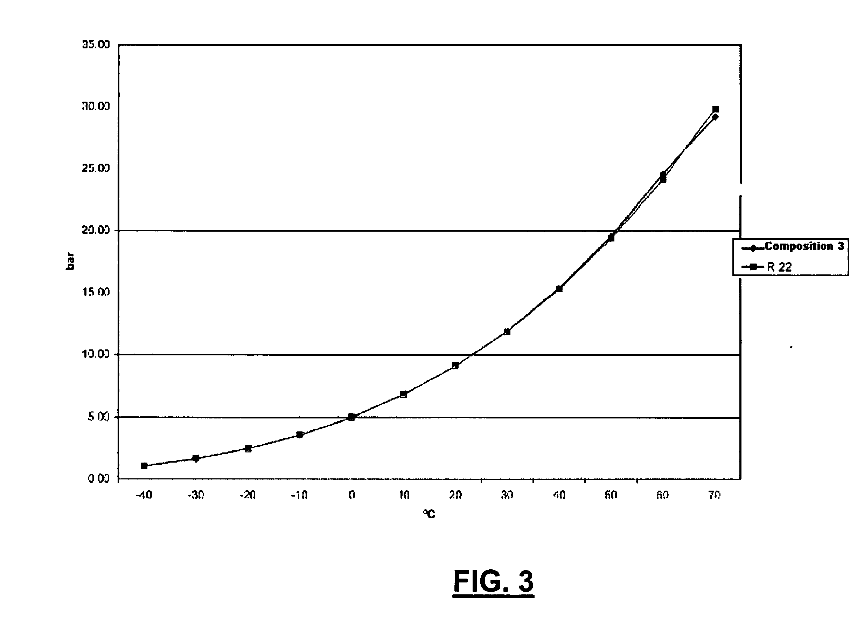

The obtained mixture has vapour pressures as can be seen in Figure 3. The mixture of Example 3 has physical and thermodynamic properties comparable to those of R-22. In this Figure 3, the vapour pressure of the composition of Example 3 (diamonds) has been depicted at different operating temperatures and it has been compared with the vapour pressures of R-22 at the same temperatures (squares). The coincidence of the curves again indicates this parallel behaviour between compositions.

### Example 4: Refrigerant composition 4.

Following also the same procedure scheme as in the previous examples, 500 kg of a composition containing 67% R-125; 15% R-152a; 15% R-134a and 3% DME are prepared. This mixture of Example 4 have a density at 20 °C of 1220 kg/m³ in liquid state and a density of 35.5 kg/m³ in gaseous state at 20 °C. The latent heat at 0 °C is 195 kJ/kg.

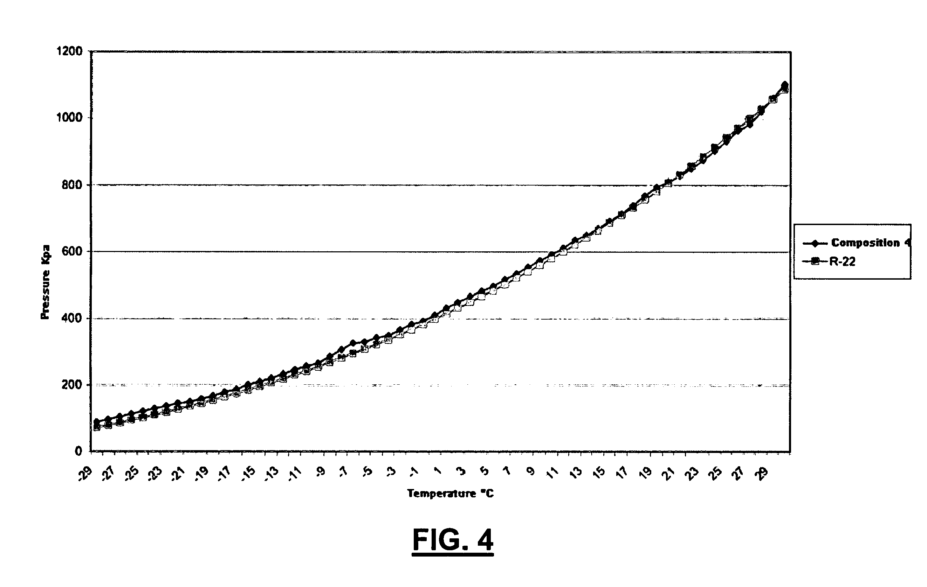

The vapour pressures of the mixture at different temperatures are determined empirically and then the obtained values are compared with those typical of R-22. As shown in Figure 4, which depicts the vapour pressures at different temperatures of a composition according to this Example 4 (diamonds) and the same data for R-22 (squares), the behaviour of said mixture of Example 4 is identical to that of R-22, therefore it is a composition suitable for being used in the refrigeration systems containing R-22, which must be substituted.

All these mixtures of Examples 1 to 4 behave like a near-azeotropic refrigerant and have a glide (range of evaporation temperatures) in the order of 1 °C a 4 °C depending on the operating temperature. As it is known, if there is a glide, it means that the mixture has a range of evaporation temperature instead of an evaporation point (temperature). Said glide reduces the refrigerating efficiency. The value observed in the compositions of the invention is far below the values of other R-22 substitute mixtures, such as R-407c, having a glide in the order of 6 °C.

It should be highlighted that the compositions of the invention have a nil reactivity with ozone and are compatible with the oils which are used in systems suitable for working with R-22.

In fact, all the compositions according to the invention have a behaviour mimetic with R-22 in the entire range of application temperatures, as illustrated above.

To substitute R-22 in a refrigeration or air conditioning system with one of the described mixtures, it is not necessary to make any modification in the installations, it must only be contemplated that the drying filter is compatible with the hydrofluorocarbons used in such mixture. The mixture must be loaded in liquid phase, since it is of compounds with different independent vapour pressures; and the amount loaded into the installation can be exactly the same as that of R-22.

Next, the tests which have been conducted with the compositions of Examples 1 and 4 are listed, in which the reactivity (inflammability) thereof can be seen, deducing that both compositions are safe for their use in both domestic and industrial refrigeration systems.

### Inflammability test

The behaviour of the compositions of Examples 1 and 4 was studied in the simulated case of them being discharged during a commercial or handling operation. Specifically, the hypothetical case is contemplated in which there was a spill of liquid from the inside of a refrigerating system to the outside, which would become vapour upon coming into contact with atmospheric pressure and temperature.

The compositions of Examples 1 and 4 together with air were fed into the inlet line of a system integrated by a glass tube with a length of 173 cm and a diameter of 5 cm. The gases were forced to pass through the tube from the lower part by means of a Massa Brooks Controller (type 5850) and during the application, the tube is closed by means of a valve at its lower part and it is opened by means of another valve located at the upper part. Two spark electrodes are inserted into the tube, approximately at 8 cm from the base or lower part of the tube. A potential of 10 kV is generated between the gap of the electrodes by means of a high voltage generator and for approximately 5 seconds, said potential acting as a combustion starter.

Three thermocouples which can indicate the progress or start of the flame are also inserted into the tube, although a visual observation of the tube is enough to detect that there is no flame (type 1 ignition); that a small flame or flash around the electrodes is started (type 2 ignition); or that a small flame is started and propagates through the tube (type 3 ignition). The existence of ignition and, therefore, the presence of a combustible atmosphere are only considered in the event that the flame advances.

The results obtained for the mixtures of Examples 1 and 4 are detailed in the attached Table 1:

**Table 1: Inflammability of the refrigerant mixtures of Examples 1 and 4.**

| **%Composition Example 1** | **% Air** | **Ignition Type** | **%Composition of Example 4** | **% Air** | **Ignition Type** |
|---|---|---|---|---|---|
| 2 | 98 | 1 | 2 | 98 | 1 |
| 4 | 96 | 1 | 4 | 96 | 1 |
| 5 | 95 | 1 | 5 | 95 | 1 |
| 6 | 94 | 1 | 6 | 94 | 1 |
| 8 | 92 | 1 | 8 | 92 | 1 |
| 10 | 90 | 1 | 10 | 90 | 1 |
| 12 | 88 | 1 | 12 | 88 | 1 |
| 14 | 86 | 1 | 14 | 86 | 1 |
| 15 | 85 | 2 | 15 | 85 | 2 |
| 16 | 84 | 2 | 16 | 84 | 2 |
| 18 | 82 | 2 | 18 | 82 | 2 |
| 20 | 80 | 2 | 20 | 80 | 2 |
| 22 | 78 | 2 | 22 | 78 | 2 |
| 24 | 76 | 2 | 24 | 76 | 2 |
| 25 | 75 | 2 | 25 | 75 | 2 |
| 30 | 70 | 2 | 30 | 70 | 2 |
| 35 | 65 | 2 | 35 | 65 | 2 |
| 40 | 60 | 2 | 40 | 60 | 2 |
| 45 | 55 | 2 | 45 | 55 | 2 |
| 50 | 50 | 2 | 50 | 50 | 2 |
| 55 | 45 | 2 | 55 | 45 | 2 |
| 60 | 40 | 2 | 60 | 40 | 2 |
| 65 | 35 | 2 | 65 | 35 | 2 |
| 70 | 30 | 2 | 70 | 30 | 2 |
| 75 | 25 | 2 | 75 | 25 | 2 |
| 85 | 15 | 2 | 85 | 15 | 2 |
| 90 | 10 | 2 | 90 | 10 | 2 |
| 95 | 5 | 2 | 95 | 5 | 2 |
| 100 | 0 | 2 | 100 | 0 | 2 |

As inferred from this Table 1, a type 3 ignition, or in other words, a flame propagation ignition, was not observed in any of the combinations.

Although it is not shown in the results of Table 1, the experiments conducted with the composition of Example 4, i.e., with 67% R-125; 15% R-152a; 15% R-134a and 3% DME, in the cases in which there was a type 2 ignition, the glass tube was damaged in the areas proximal to the electrodes. Hydrofluoric acid HF is released during the local ignition, etching the tube. Apparently, in the composition of Example 4, there is a more reactive compound, R-134a, which although it does not lead to a positive ignition, can cause the generation of dangerous radicals and other reaction products. In any case and very advantageously, the composition proposed in Example 4 does not result in a type 3 or positive ignition, despite the fact that the literature indicates that the inflammability limits of mixtures of DME and R152a to which R-134a is added increases, the reactivity of the mixtures increasing.

It could also be proved with the mixtures detailed in Table 1 that no ignition is observed when the compositions of Examples 1 and 4 are discharged or sprayed into the flame.

### Comparative study of the behaviour of the refrigerant R-22 and the compositions of Examples 1 and 4.

Two types of heat transfer installations or systems are assembled: one for air conditioning with a heat pump, and another one for refrigeration with glycolated water and air in the condenser. These refrigeration and air conditioning systems are tested under different conditions simulating actual situations.

Specifically, the air conditioning system with a heat pump is tested in summer conditions (indoor T comprised between 22 °C and 28 °C and with 50% relative humidity RH and an outdoor T comprised between 25 °C and 40 °C), measuring the refrigerating capacities and the absorbed power depending on the temperatures. The air conditioning system with a heat pump is also tested in winter conditions (indoor T comprised between 19 °C and 23 °C and with 75% relative humidity RH and an outdoor T comprised between -10 °C and 10 °C), this time measuring the calorific values and the absorbed power depending on the temperatures.

For the refrigeration system, the tests are conduced in conditions of outdoor temperature comprised between 15 °C and 35 °C in the condensation area and with glycolated water comprised between 0 °C and -30 °C in the evaporation area.

In all these experiments, the installations are loaded with the appropriate composition and allowed to stand for at least one hour. Next, the systems are started and measurements are made from 30 minutes onwards. Once in steady state, measurements of refrigerating capacity, absorbed power and calorific value are taken at different points in the installations, specifically, at the inlet and outlet of refrigerant mixture, at the intermediate bend and at the inlet and outlet of air. For the glycolated water circuit, samples are taken at the inlet and outlet of refrigerant, at a midpoint of the coil and in the glycolated water itself.

The following tables show the values measured for the refrigerating capacity, the absorbed power and the calorific value at different points of the installations of the two heat transfer systems and in different conditions of temperature.

**Table 2: Refrigerating capacity in an air conditioning system using the refrigerant mixtures of Examples 1 and 4, as well as of R22, depending on the indoor and outdoor temperatures in summer conditions.**

| | | Tₒᵤₜ (°C) | | | |
|---|---|---|---|---|---|
| | Tᵢₙ (°C) | 25 | 30 | 35 | 40 |
| Refrigerating | 22 | 1980 | 1850 | 1750 | 1610 |
| capacity | 25 | 2200 | 2100 | 1950 | 1810 |
| R22 | 28 | 2500 | 2380 | 2200 | 2050 |
| Refrigerating | 22 | 1960 | 1830 | 1750 | 1570 |
| capacity | 25 | 2180 | 2080 | 1950 | 1780 |
| Composition 1 | 28 | 2475 | 2360 | 2200 | 2010 |
| Refrigerating | 22 | 1950 | 1820 | 1715 | 1560 |
| capacity | 25 | 2170 | 2070 | 1920 | 1765 |
| Composition 4 | 28 | 2470 | 2345 | 2160 | 2000 |

The refrigerating capacities of the air conditioning installation, referred to above in Table 2, obtained achieved with the composition of Example 1 and the composition of Example 4 depending on the indoor and outdoor temperatures in summer conditions have been depicted in Figure 5 and they have been compared with the refrigerating capacities of R-22 in the same conditions. The coincidence of the curves indicates a parallel behaviour between the compositions.

**Table 3: Absorbed power in an air conditioning system using the refrigerant mixtures of Examples 1 and 4, as well as of R22, depending on the indoor and outdoor temperatures in summer conditions.**

| | | Tₒᵤₜ (°C) | | | |
|---|---|---|---|---|---|
| | Tᵢₙ (°C) | 25 | 30 | 35 | 40 |
| Absorbed | 22 | 680 | 720 | 760 | 810 |
| power | 25 | 690 | 730 | 775 | 825 |
| R22 | 28 | 700 | 740 | 785 | 840 |
| Absorbed | 22 | 670 | 705 | 760 | 785 |
| power | 25 | 680 | 715 | 775 | 800 |
| Composition 1 | 28 | 690 | 725 | 785 | 810 |
| Absorbed | 22 | 670 | 710 | 750 | 790 |
| power | 25 | 680 | 720 | 760 | 800 |
| Composition 4 | 28 | 690 | 730 | 770 | 815 |

The absorbed power of the air conditioning installation, referred to above in Table 3, obtained with the composition of Example 1 and the composition of Example 4 depending on the indoor and outdoor temperatures in summer conditions has been depicted in Figure 6 and it has been compared with the refrigerating capacities of R-22 in the same conditions. The coincidence of the curves again confirms a parallel behaviour between the compositions.

**Table 4: Calorific value in an air conditioning system using the refrigerant mixtures of Examples 1 and 4, as well as of R22, depending on the indoor and outdoor temperatures in winter conditions.**

| | | Tₒᵤₜ (in °C) | | | | |
|---|---|---|---|---|---|---|
| | Tᵢₙ (in °C) | 10 | 5 | 0 | -5 | -10 |
| Calorific | 23 | 2320 | 1950 | 1640 | 1380 | 1160 |
| value | 21 | 2400 | 2020 | 1690 | 1420 | 1190 |
| R22 | 19 | 2480 | 2090 | 1750 | 1470 | 1230 |
| Calorific | 23 | 2300 | 1920 | 1600 | 1340 | 1120 |
| value | 21 | 2380 | 1990 | 1660 | 1390 | 1160 |
| Composition 1 | 19 | 2460 | 2060 | 1710 | 1440 | 1200 |
| Calorific | 23 | 2300 | 1900 | 1580 | 1310 | 1090 |
| value | 21 | 2370 | 1970 | 1630 | 1360 | 1120 |
| Composition 4 | 19 | 2450 | 2030 | 1680 | 1400 | 1160 |

The calorific values of the air conditioning installation, referred to above in Table 4, obtained with the composition of Example 1 and with the composition of Example 4 depending on the indoor and outdoor temperatures in winter conditions have been depicted in Figure 7 and they have been compared with the calorific values of R22 in the same conditions. The coincidence of the curves again confirms a parallel behaviour between the compositions.

**Table 5: Absorbed power in an air conditioning system using the refrigerant mixtures of Examples 1 and 4, as well as of R22, depending on the indoor and outdoor temperatures in winter conditions.**

| | | T_{out.} (in °C) | | | | |
|---|---|---|---|---|---|---|
| | Tᵢₙ (in °C) | 10 | 5 | 0 | -5 | -10 |
| Absorbed | 23 | 690 | 670 | 650 | 640 | 620 |
| power | 21 | 670 | 650 | 640 | 620 | 610 |
| R22 | 19 | 650 | 630 | 620 | 610 | 600 |
| Absorbed | 23 | 670 | 660 | 650 | 630 | 620 |
| power | 21 | 660 | 640 | 630 | 610 | 600 |
| Composition 1 | 19 | 640 | 620 | 610 | 600 | 590 |
| Absorbed | 23 | 670 | 660 | 640 | 630 | 610 |
| power | 21 | 655 | 640 | 630 | 610 | 600 |
| Composition 4 | 19 | 640 | 630 | 620 | 600 | 590 |

The absorbed power of the air conditioning installation, referred to above in Table 5, obtained with the composition of Example 1 and with the composition of Example 4 depending on the indoor and outdoor temperatures in winter conditions has been depicted in Figure 8 and it has been compared with the calorific values of R-22 in the same conditions. The coincidence of the curves also confirms here this parallel behaviour between the compositions.

**Table 6: Refrigerating capacities of a refrigeration installation with glycolated water and air in the condenser, obtained with the refrigerant mixtures of Examples 1 and 4, as well as of R22, depending on several temperatures.**

| | | T of glycol (in °C) | | | |
|---|---|---|---|---|---|
| | Tₒᵤₜ of air (in °C) | 0 | -10 | -20 | -30 |
| Refrigerating | 35 | 1350 | 950 | 670 | 470 |
| capacity | 30 | 1460 | 1030 | 720 | 510 |
| R22 | 25 | 1580 | 1120 | 790 | 560 |
| | 20 | 1710 | 1200 | 850 | 600 |
| | 15 | 1850 | 1300 | 920 | 650 |
| Refrigerating | 35 | 1340 | 950 | 670 | 470 |
| capacity | 30 | 1450 | 1020 | 720 | 500 |
| Composition 1 | 25 | 1570 | 1100 | 780 | 550 |
| | 20 | 1700 | 1200 | 840 | 600 |
| | 15 | 1840 | 1300 | 920 | 650 |
| Refrigerating | 35 | 1305 | 920 | 650 | 460 |
| Capacity | 30 | 1420 | 1000 | 700 | 500 |
| Composition 4 | 25 | 1540 | 1090 | 770 | 540 |
| | 20 | 1670 | 1180 | 830 | 580 |
| | 15 | 1810 | 1280 | 900 | 630 |

The refrigerating capacities of a refrigeration installation with glycolated water and air in the condenser, obtained with the compositions of Examples 1 and 4 depending on outdoor temperatures between 15 °C and 35 °C and on glycol temperatures comprised between 0 °C and -30 °C have been depicted in Figure 9 and they have been compared with the values obtained with R22 in the same conditions.

**Table 7: Absorbed power of a refrigeration installation with glycolated water and air in the condenser, obtained with the refrigerant mixtures of Examples 1 and 4, as well as of R22, depending on several temperatures.**

| | | T of glycol (in °C) | | | |
|---|---|---|---|---|---|
| | T_{out.} of air (in °C) | 0 | -10 | -20 | -30 |
| Absorbed | 35 | 740 | 710 | 670 | 640 |
| power | 30 | 700 | 670 | 630 | 600 |
| R22 | 25 | 660 | 630 | 600 | 570 |
| | 20 | 620 | 600 | 570 | 540 |
| | 15 | 590 | 560 | 530 | 510 |
| Absorbed | 35 | 735 | 700 | 670 | 640 |
| power | 30 | 690 | 660 | 630 | 600 |
| Composition 1 | 25 | 650 | 620 | 590 | 560 |
| | 20 | 610 | 580 | 560 | 530 |
| | 15 | 580 | 560 | 520 | 500 |
| Absorbed | 35 | 730 | 700 | 670 | 640 |
| power | 30 | 690 | 660 | 630 | 600 |
| Composition 4 | 25 | 650 | 620 | 590 | 560 |
| | 20 | 610 | 580 | 560 | 530 |
| | 15 | 580 | 550 | 520 | 500 |

The absorbed power of the refrigeration installation with glycolated water and with air in the condenser, obtained with the compositions of Examples 1 and 4 depending on outdoor temperatures comprised between 15 °C and 35 °C and on glycol temperatures comprised between 0 °C and -30 °C has been depicted in Figure 10 and it has been compared with the values obtained with R22 in the same conditions.

As inferred from these Tables 2 to 7 and from Figures 5 to 10, the differences between the refrigerating capacities, calorific values and absorbed power are minimal, which corroborates that the compositions object of the invention are useful as refrigerants and perfect alternatives to R-22, which will be substituted in all the equipment containing it.

The best results have been obtained with the same load by weight of refrigerating composition, whether it is R-22 or the compositions of Examples 1 and 4, with only a maximum oscillation of 1.5% by weight, a value which must not be considered significant.

### Example 5: Refrigerant composition 5.

In the same way as in Example 1, a refrigerant mixture is prepared with the following final proportions by weight: 67% R-125, 15% R-152a, 15% R-152a and 3% RE170 (DME). The obtained mixture has the physical properties and characteristics as can be seen in Table 8.

In addition, Table 9 shows the thermodynamic properties of refrigerant composition 5.

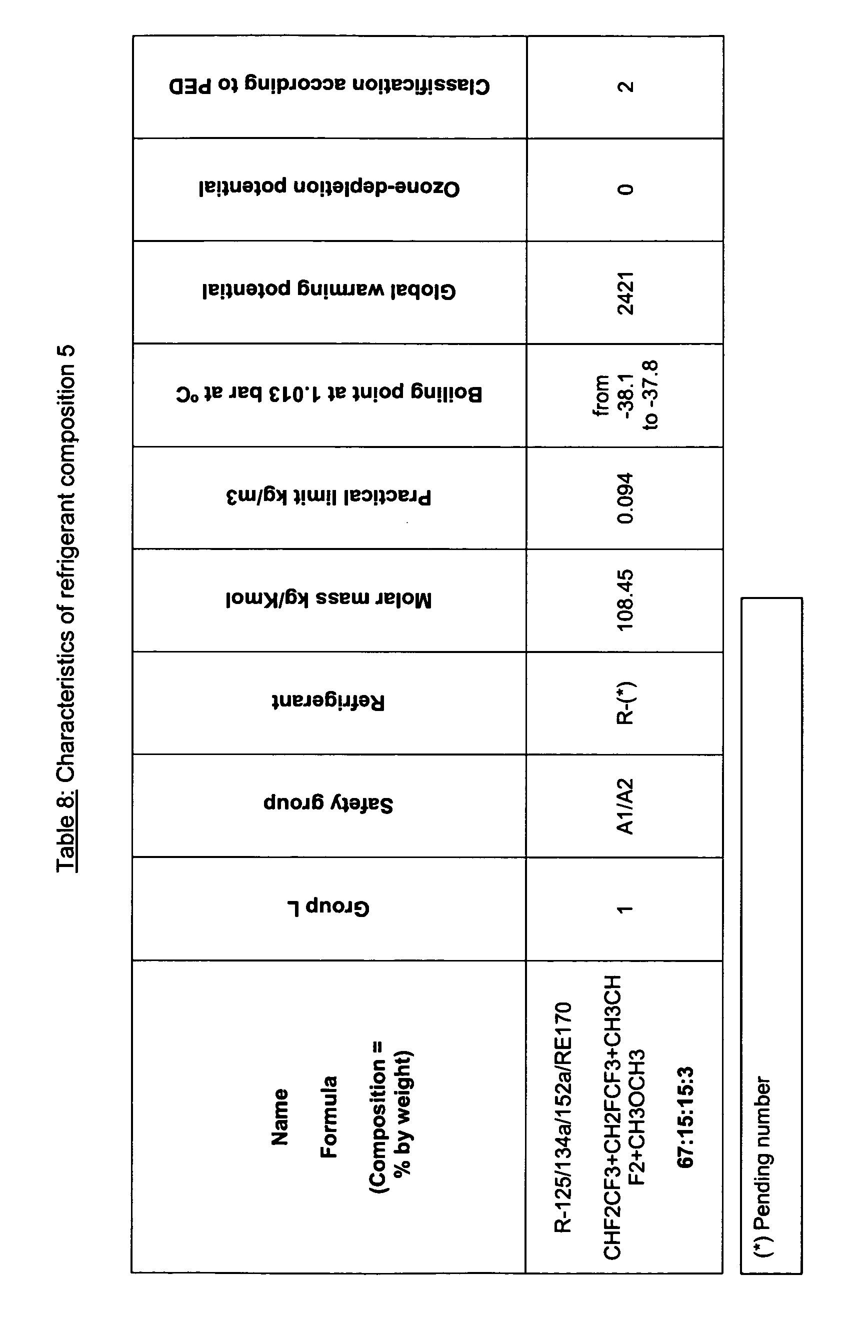

**Table 9: Thermodynamic properties of refrigerant composition 5 depending on the temperature**

| | **Molar Mass kg/kmol** | **Critical Temp. °C** | **Critical Pressure bar** | **Critical density kg/m³** | **Viscosity liquid 0°C mPa.s** | **Viscosity Vapour 0°C mPa.s** | |
|---|---|---|---|---|---|---|---|
| | 108.45 | 81.8 | 41.5 | 498.5 | 0.2224 | 0.0115 | |

| **T °C** | **Average Value Absolute pressure bar** | **Density liquid kg/m³** | **Density Vapour kg/m³** | **Enthalpy Liquid kJ/kg** | **Enthalpy Vapour kJ/kg** | **Entropy Liquid kJ /kg K** | **Entropy Vapour kJ/kg K** |
|---|---|---|---|---|---|---|---|
| -50 | 0.80 | 1358.9 | 4.2477 | 132.01 | 338.99 | 0.72581 | 1.6511 |
| -49 | 0.83 | 1356.6 | 4.4025 | 132.97 | 339.32 | 0.73012 | 1.6494 |
| -48 | 0.87 | 1353.6 | 4.6085 | 134.2 | 339.75 | 0.73565 | 1.6473 |
| -47 | 0.91 | 1350.8 | 4.8142 | 135.39 | 340.17 | 0.74097 | 1.6454 |
| -46 | 0.95 | 1348 | 5.0196 | 136.54 | 340.58 | 0.74609 | 1.6436 |
| -45 | 0.98 | 1346 | 5.1735 | 137.38 | 340.88 | 0.74981 | 1.6423 |
| -44 | 1.03 | 1342.8 | 5.4296 | 138.73 | 341.37 | 0.7558 | 1.6402 |
| -43 | 1.07 | 1340.3 | 5.6342 | 139.78 | 341.76 | 0.76041 | 1.6387 |
| -42 | 1.11 | 1337.8 | 5.8386 | 140.8 | 342.13 | 0.76487 | 1.6373 |
| -41 | 1.16 | 1334.8 | 6.0938 | 142.03 | 342.58 | 0.77026 | 1.6356 |
| -40 | 1.21 | 1332 | 6.3486 | 143.23 | 343.03 | 0.77546 | 1.634 |
| -39 | 1.26 | 1329.2 | 6.6032 | 144.38 | 343.46 | 0.78047 | 1.6325 |
| -38 | 1.31 | 1326.4 | 6.8575 | 145.51 | 343.88 | 0.78532 | 1.6311 |
| -37 | 1.36 | 1323.8 | 7.1115 | 146.6 | 344.3 | 0.79001 | 1.6298 |
| -36 | 1.42 | 1320.7 | 7.4161 | 147.87 | 344.78 | 0.79544 | 1.6283 |
| -35 | 1.48 | 1317.7 | 7.7203 | 149.1 | 345.25 | 0.80069 | 1.6269 |
| -34 | 1.54 | 1314.8 | 8.0242 | 150.3 | 345.71 | 0.80576 | 1.6256 |
| -33 | 1.60 | 1312 | 8.3278 | 151.46 | 346.15 | 0.81066 | 1.6244 |
| -32 | 1.66 | 1309.2 | 8.6312 | 152.59 | 346.59 | 0.81541 | 1.6232 |
| -31 | 1.73 | 1306.1 | 8.9849 | 153.87 | 347.08 | 0.82077 | 1.6219 |
| -30 | 1.79 | 1303.5 | 9.2878 | 154.93 | 347.5 | 0.82522 | 1.6209 |
| -29 | 1.87 | 1300.1 | 9.6914 | 156.32 | 348.04 | 0.83096 | 1.6196 |
| -28 | 1.94 | 1297.2 | 10.044 | 157.49 | 348.5 | 0.83581 | 1.6186 |
| -27 | 2.02 | 1294 | 10.447 | 158.79 | 349.01 | 0.84119 | 1.6174 |
| -26 | 2.10 | 1290.9 | 10.85 | 160.06 | 349.5 | 0.84638 | 1.6164 |
| -25 | 2.18 | 1287.9 | 11.253 | 161.29 | 349.99 | 0.85142 | 1.6154 |
| -24 | 2.26 | 1284.9 | 11.655 | 162.49 | 350.46 | 0.8563 | 1.6145 |
| -23 | 2.34 | 1282 | 12.058 | 163.66 | 350.92 | 0.86104 | 1.6136 |
| -22 | 2.42 | 1279.2 | 12.46 | 164.8 | 351.37 | 0.86564 | 1.6128 |
| -21 | 2.51 | 1276.1 | 12.912 | 166.05 | 351.86 | 0.87067 | 1.6119 |
| -20 | 2.59 | 1273.4 | 13.315 | 167.14 | 352.29 | 0.87502 | 1.6111 |
| -19 | 2.68 | 1270.4 | 13.767 | 168.33 | 352.76 | 0.87978 | 1.6104 |
| -18 | 2.78 | 1267.2 | 14.269 | 169.62 | 353.27 | 0.88491 | 1.6095 |
| -17 | 2.88 | 1264 | 14.772 | 170.88 | 353.77 | 0.8899 | 1.6088 |
| -16 | 2.99 | 1260.6 | 15.325. | 172.23 | 354.3 | 0.89522 | 1.608 |
| -15 | 3.10 | 1257.3 | 15.878 | 173.54 | 354.82 | 0.90038 | 1.6072 |
| -14 | 3.21 | 1254.1 | 16.431 | 174.82 | 355.33 | 0.90539 | 1.6065 |
| -13 | 3.32 | 1250.9 | 16.984 | 176.07 | 355.82 | 0.91026 | 1.6059 |
| -12 | 3.44 | 1247.6 | 17.588 | 177.4 | 356.35 | 0.91543 | 1.6052 |
| -11 | 3.56 | 1244.3 | 18.192 | 178.7 | 356.86 | 0.92045 | 1.6046 |
| -10 | 3.69 | 1240.8 | 18.847 | 180.08 | 357.39 | 0.92573 | 1.604 |
| -9 | 3.82 | 1237.4 | 19.503 | 181.42 | 357.92 | 0.93086 | 1.6034 |
| -8 | 3.96 | 1233.7 | 20.209 | 182.82 | 358.47 | 0.93624 | 1.6028 |
| -7 | 4.12 | 1229.7 | 21.017 | 184.39 | 359.08 | 0.94219 | 1.6021 |
| -6 | 4.27 | 1226 | 21.776 | 185.82 | 359.63 | 0.9476 | 1.6016 |
| -5 | 4.43 | 1222.2 | 22.586 | 187.31 | 360.21 | 0.95321 | 1.601 |
| -4 | 4.58 | 1218.7 | 23.346 | 188.67 | 360.73 | 0.95832 | 1.6005 |
| -3 | 4.74 | 1215 | 24.158 | 190.09 | 361.28 | 0.96362 | 1.6001 |
| -2 | 4.89 | 1211.6 | 24.921 | 191.4 | 361.78 | 0.96846 | 1.5996 |
| -1 | 5.05 | 1208 | 25.736 | 192.75 | 362.3 | 0.9735 | 1.5992 |
| 0 | 5.21 | 1204.5 | 26.552 | 194.08 | 362.8 | 0.9784 | 1.5988 |
| 1 | 5.37 | 1201.1 | 27.369 | 195.39 | 363.29 | 0.98319 | 1.5984 |
| 2 | 5.53 | 1197.7 | 28.188 | 196.66 | 363.77 | 0.98787 | 1.5981 |
| 3 | 5.69 | 1194.4 | 29.009 | 197.92 | 364.24 | 0.99244 | 1.5978 |
| 4 | 5.86 | 1190.9 | 29.882 | 199.22 | 364.72 | 0.99718 | 1.5974 |
| 5 | 6.03 | 1187.5 | 30.757 | 200.5 | 365.2 | 1.0018 | 1.5971 |
| 6 | 6.21 | 1184 | 31.686 | 201.83 | 365.69 | 1.0066 | 1.5968 |
| 7 | 6.39 | 1180.5 | 32.617 | 203.14 | 366.16 | 1.0113 | 1.5965 |
| 8 | 6.57 | 1177 | 33.55 | 204.42 | 366.63 | 1.0159 | 1.5962 |
| 9 | 6.77 | 1173.2 | 34.59 | 205.81 | 367.13 | 1.0209 | 1.5959 |
| 10 | 6.97 | 1169.5 | 35.633 | 207.18 | 367.62 | 1.0257 | 1.5956 |
| 11 | 7.19 | 1165.5 | 36.783 | 208.66 | 368.14 | 1.031 | 1.5953 |
| 12 | 7.42 | 1161.4 | 37.99 | 210.17 | 368.67 | 1.0363 | 1.595 |
| 13 | 7.63 | 1157.7 | 39.096 | 211.52 | 369.15 | 1.041 | 1.5948 |
| 14 | 7.85 | 1153.8 | 40.258 | 212.91 | 369.63 | 1.0459 | 1.5945 |
| 15 | 8.07 | 1150 | 41.424 | 214.28 | 370.1 | 1.0507 | 1.5943 |
| 16 | 8.30 | 1146.1 | 42.648 | 215.69 | 370.57 | 1.0556 | 1.5941 |
| 17 | 8.53 | 1142.3 | 43.876 | 217.07 | 371.04 | 1.0603 | 1.5938 |
| 18 | 8.77 | 1138.3 | 45.163 | 218.48 | 371.51 | 1.0652 | 1.5936 |
| 19 | 9.02 | 1134.2 | 46.509 | 219.93 | 371.99 | 1.0702 | 1.5934 |
| 20 | 9.27 | 1130.2 | 47.861 | 221.36 | 372.45 | 1.0751 | 1.5932 |
| 21 | 9.53 | 1126 | 49.274 | 222.81 | 372.92 | 1.08 | 1.5929 |
| 22 | 9.78 | 1122.1 | 50.639 | 224.19 | 373.35 | 1.0847 | 1.5927 |
| 23 | 10.05 | 1117.9 | 52.12 | 225.65 | 373.81 | 1.0896 | 1.5925 |
| 24 | 10.31 | 1113.9 | 53.553 | 227.04 | 374.24 | 1.0943 | 1.5923 |
| 25 | 10.58 | 1109.8 | 55.049 | 228.46 | 374.68 | 1.0991 | 1.5921 |
| 26 | 10.86 | 1105.6 | 56.609 | 229.9 | 375.11 | 1.1039 | 1.5919 |
| 27 | 11.14 | 1101.4 | 58.177 | 231.32 | 375.53 | 1.1087 | 1.5917 |
| 28 | 11.44 | 1097 | 59.868 | 232.83 | 375.97 | 1.1136 | 1.5915 |
| 29 | 11.74 | 1092.6 | 61.569 | 234.3 | 376.4 | 1.1185 | 1.5913 |
| 30 | 12.04 | 1088.3 | 63.28 | 235.76 | 376.81 | 1.1233 | 1.5911 |
| 31 | 12.35 | 1083.8 | 65.06 | 237.24 | 377.22 | 1.1282 | 1.5908 |
| 32 | 12.66 | 1079.4 | 66.852 | 238.7 | 377.62 | 1.133 | 1.5906 |
| 33 | 12.98 | 1074.9 | 68.715 | 240.19 | 378.02 | 1.1378 | 1.5904 |
| 34 | 13.30 | 1070.4 | 70.591 | 241.66 | 378.4 | 1.1426 | 1.5902 |
| 35 | 13.64 | 1065.7 | 72.599 | 243.19 | 378.8 | 1.1475 | 1.5899 |
| 36 | 13.97 | 1061.2 | 74.564 | 244.66 | 379.17 | 1.1523 | 1.5897 |
| 37 | 14.32 | 1056.4 | 76.664 | 246.2 | 379.54 | 1.1572 | 1.5894 |
| 38 | 14.67 | 1051.7 | 78.782 | 247.71 | 379.91 | 1.1621 | 1.5891 |
| 39 | 15.03 | 1046.8 | 80.979 | 249.25 | 380.27 | 1.167 | 1.5889 |
| 40 | 15.39 | 1042 | 83.195 | 250.77 | 380.61 | 1.1718 | 1.5886 |
| 41 | 15.76 | 1037.1 | 85.495 | 252.31 | 380.95 | 1.1767 | 1.5883 |
| 42 | 16.14 | 1032 | 87.879 | 253.88 | 381.29 | 1.1816 | 1.588 |
| 43 | 16.52 | 1027 | 90.287 | 255.42 | 381.61 | 1.1865 | 1.5877 |
| 44 | 16.92 | 1021.8 | 92.848 | 257.03 | 381.93 | 1.1915 | 1.5873 |
| 45 | 17.31 | 1016.7 | 95.372 | 258.57 | 382.23 | 1.1963 | 1.587 |
| 46 | 17.72 | 1011.3 | 98.055 | 260.18 | 382.53 | 1.2013 | 1.5866 |
| 47 | 18.13 | 1006 | 100.77 | 261.77 | 382.81 | 1.2063 | 1.5862 |
| 48 | 18.55 | 1000.5 | 103.58 | 263.38 | 383.09 | 1.2112 | 1.5858 |
| 49 | 18.98 | 994.97 | 106.5 | 265.01 | 383.35 | 1.2163 | 1.5854 |
| 50 | 19.41 | 989.42 | 109.46 | 266.62 | 383.6 | 1.2212 | 1.585 |
| 51 | 19.85 | 983.74 | 112.52 | 268.26 | 383.84 | 1.2262 | 1.5845 |
| 52 | 20.30 | 977.94 | 115.7 | 269.91 | 384.07 | 1.2312 | 1.584 |
| 53 | 20.76 | 972 | 119 | 271.59 | 384.28 | 1.2363 | 1.5835 |
| 54 | 21.22 | 966.06 | 122.34 | 273.24 | 384.48 | 1.2413 | 1.583 |
| 55 | 21.70 | 959.85 | 125.89 | 274.96 | 384.66 | 1.2465 | 1.5824 |
| 56 | 22.18 | 953.63 | 129.5 | 276.66 | 384.83 | 1.2516 | 1.5817 |
| 57 | 22.67 | 947.26 | 133.25 | 278.38 | 384.98 | 1.2567 | 1.5811 |
| 58 | 23.16 | 940.87 | 137.07 | 280.09 | 385.11 | 1.2618 | 1.5804 |
| 59 | 23.67 | 934.18 | 141.12 | 281.85 | 385.22 | 1.2671 | 1.5797 |
| 60 | 24.18 | 927.46 | 145.26 | 283.61 | 385.31 | 1.2723 | 1.5789 |

### Example 6: Embodiment of the substitution of R-22 with refrigerant composition 5.

To substitute R-22 in a refrigeration or air conditioning system with the refrigerant composition 5 described above, it is not necessary to make any modification in the installations, it must only be contemplated that the drying filter is compatible with the hydrofluorocarbons used in such mixture. The mixture must be loaded in liquid phase, since it is of compounds with different independent vapour pressures; and the amount loaded into the installation can be exactly the same as that of R-22.

Next, the test that was conducted for substituting the gas R-22, which utilization and market are prohibited as of January 1, 2010 according to the Law in force in the European Union, is described.

The air conditioning apparatus corresponds to a model of the year 2002 and comprises a condenser and two evaporators. The pressure and temperature with the R-22 are checked:
- Temperature: 11.8 °C
- Pressure: 6.7 kg/cm³

Next, the reconversion sequence is described:
- 09:45 h: Start of the extraction and recovery of the refrigerant with a Ritchie recovery machine (Yellow Jacket R70a), obtaining a recovery of 2 kg of R-22 packaged in a special gas recovery bottle.
- 10:00 h: After the stop of the recovery machines, which is activated by the low-pressure controllers, the hoses are purged to leave them without gas and this gas is recovered in the recovery bottle.
- 10:05 h: End of the recovery of R-22.
- 10:10 h: The vacuum of the installation is started with a TELSTAR 2 F-3 pump equipped with an electrically-operated valve and vacuum gauge (15 minutes).
- 10:25 h: The load is started with 2 kg of refrigerant composition 5, i.e., the same amount as with R-22.
- 10:30 h: After checking the pressures and temperature in the high pressure area of the refrigerating equipment, the reconversion is considered as ended. Table 10 show the values of the pressures and temperatures in the high pressure area of the refrigerating equipment which correspond between R-22 and the new composition 5.

**Table 10:**

| | R-22 | Composition 5 |
|---|---|---|
| Pressure | 19.32 kg/cm³ | 19.30 kg/cm³ |
| Temperature | 52 °C | 52 °C |

The substitution of the gas R-22 with the refrigerant composition 5 has been performed in a total time of 45 minutes. Hoses with stop valves have been used to prevent the leakage of gases into the atmosphere during the reconversion according to the new regulations.

After a summer season and a winter season have elapsed, the load of refrigerant, the operating pressures and temperatures of this apparatus have been checked. It can be asserted that the efficiency is satisfactory and accordingly the equipment remains in service without any anomaly being detected in the operation. Thus, it has been possible to prove that the mixture between R-22 and the composition 5 at any concentration is viable. It must be indicated that most reconverted equipment is equipped with electronic control. In this case, said control has not detected the change either.

### Example 7: Another embodiment of the substitution of R-22 with refrigerant composition 5.

Next, another embodiment of the substitution of R-22 with refrigerant composition 5 is described.

### Refrigerating Equipment

Three hemi-hermetic compressors
Condenser
Constant positive central unit.
Refrigerant R-22
SUNISO 3 GS type mineral oil. (ISO-32)

### Reconversion guideline

The pressures, the temperatures and the state of the oil quality and viscosity are checked.
Evaporation T = -10 °C.
Condensation T = +40 °C.
Operating T in large chests and display cabinets of 1 °C.
- 7.00 h: Start of the extraction and recovery of the refrigerant with two Ritchie machines (Yellow Jacket), obtaining a recovery of 73.20 kg of R-22 packaged in special gas recovery bottles.
- 8.00 h: After the stop of the recovery machines, which is activated by the low-pressure controllers, the vacuum of the installation is carried out, which is performed with a TELSTAR 2 F-3 pump equipped with an electronic vacuum gauge
- 8.45 h: A vacuum of 50 mbar is reached. At the time, the temperature of the display cabinets has increased to 14 °C
- 9.15 h: The load of composition 5 is started with a total of 60 kg (incomplete load).
- 10.00 h: The first load of composition 5 ends. (The temperature of the display cabinets of meat, vegetable and dairy products is of +1 °C).
- 10.45 h: The loading of the rest of the refrigerant is started, completing a load of 70 kg.

One of the compressors, through the sight glass, indicates a slightly low level of the oil, therefore it is levelled with the universal oil POE (9-LIFE) viscosity 32.

The possible leakages are checked with a RITCHIE electronic detector (YELLOW JACKET), model GRT 69366, with a sensitivity of 0.85 g/year and the total system tightness is verified.
- 11.00 h: After checking pressures and temperatures, the reconversion is considered as ended:
   Condensation T = 40 °C.
   Evaporation T = -10 °C.
   Operating T = +1 °C.

In conclusion, it has been possible to prove the high refrigerating capacity and efficiency of refrigerant composition 5, since the operating temperature of +1 °C has been reached more quickly than with the original refrigerant R-22.

## Claims

1. A composition comprising from 60 to 75% by weight of the refrigerant agent pentafluoroethane (R-125); from 15 to 30% by weight of the refrigerant agent 1,1-difluoroethane (R-152a); from 2 to 15% by weight of a refrigerant agent selected from a first group consisting of 1,1,1,2,3,3,3-heptafluoropropane (R-227ea) and 1,1,1,2-tetrafluoroethane (R-134a) or a mixture of both; and from 0 to 4% by weight of another refrigerant agent selected from a second group consisting of dimethyl ether (DME) and propane (R-290) or a mixture of both.

2. The composition of claim 1, **characterized in that** it comprises from 65 to 75% by weight of the refrigerant agent pentafluoroethane (R-125); from 15 to 30% by weight of the refrigerant agent 1,1-difluoroethane (R-152a); from 2 to 10% by weight of a refrigerant agent selected from a first group consisting of 1,1,1,2,3,3,3-heptafluoropropane (R-227ea) and 1,1,1,2-tetrafluoroethane (R-134a), or a mixture of both; and from 0 to 4% by weight of another refrigerant agent selected from a second group consisting of dimethyl ether (DME) and propane or a mixture of both.

3. The composition according to any one of the previous claims, **characterized in that** it comprises the compound 1,1,1,2,3,3,3-heptafluoropropane (R-227ea) as a refrigerant agent of the first group.

4. The composition according to any one of claims 1 or 2, **characterized in that** it comprises the compound 1,1,1,2-tetrafluoroethane (R-134a) as a refrigerant agent of the first group.

5. The composition according to any one of claims 1 or 2, **characterized in that** it comprises a mixture of the compounds 1,1,1,2,3,3,3-heptafluoropropane (R-227ea) and 1,1,1,2-tetrafluoroethane (R-134a) as a refrigerant agent of the first group.

6. The composition according to any one of the previous claims, **characterized in that** it comprises the compound dimethyl ether (DME) as a refrigerant agent of the second group.

7. The composition according to any one of claims 1 to 5, **characterized in that** it comprises the compound propane (R-290) as a refrigerant agent of the second group.

8. The composition according to any one of claims 1 to 5, **characterized in that** it comprises a mixture of the compounds dimethyl ether (DME) and propane (R-290) as a refrigerant agent of the second group.

9. The composition according to any one of claims 1 or 2, **characterized in that** it consists of 70% by weight of pentafluoroethane (R-125); 20% by weight of 1,1-difluoroethane (R-152a); 7% by weight of 1,1,1,2,3,3,3-heptafluoropropane (R-227ea) and 3% by weight of dimethyl ether (DME).

10. The composition according to any one of claims 1 or 2, **characterized in that** it consists of 68% by weight of R-125; 24% by weight of R-152a; 5% by weight of R-227ea and 3% by weight of DME.

11. The composition according to any one of claims 1 or 2, **characterized in that** it consists of 70% by weight of R-125; 22% by weight of R-152a; 5% by weight of R-227ea and 3% by weight of DME.

12. The composition according to any one of claims 1 or 2, **characterized in that** it consists of 67% by weight of R-125, 15% by weight of R-152a; 15% by weight of R-134a; and 3% by weight of DME.

13. Use of a composition according to any one of the previous claims as a monochlorodifluoromethane (R-22) substitute refrigerant fluid in a heat transfer system.

14. A heat transfer system comprising a composition according to any one of claims 1 to 12 as a monochlorodifluoromethane (R-22) substitute refrigerant fluid.

15. An apparatus for air conditioning comprising the heat transfer system as defined in claim 14.
